Europäisches Patentamt

European Patent Office

Office européen des brevets

(19)

(11) Publication number: **0 257 589**

**A2**

## EUROPEAN PATENT APPLICATION

(21) Application number: **87112169.5**

(22) Date of filing: **21.08.87**

(51) Int. Cl.⁴: **G06F 1/00**

(30) Priority: **21.08.86 JP 196283/86**
   **21.08.86 JP 196284/86**

(43) Date of publication of application:
   **02.03.88 Bulletin 88/09**

(84) Designated Contracting States:
   **DE FR GB**

(71) Applicant: **Minolta Camera Kabushiki Kaisha**
   **Osaka Kokusai Building 30, Azuchi-machi**
   **2-chome**
   **Higashi-ku Osaka 541(JP)**

(72) Inventor: **Kurita, Kikuo**
   **1-12-40, Kitanakaburi**
   **Hirakata-Shi Osaka-Fu(JP)**

(74) Representative: **Glawe, Delfs, Moll & Partner**
   **Patentanwälte**
   **Postfach 26 01 62 Liebherrstrasse 20**
   **D-8000 München 26(DE)**

(54) **Word processor.**

(57) A word processor comprising a keyboard for inputting data, a display for displaying the input data, and a printing section for printing the input data. The display is the flat panel type and is supported by stays in a position above a printing position and at a distance to an operator's eye point substantially corresponding to a distance between the operator's eye point and the printing position.

FIG. 3

# WORD PROCESSOR

## Background of the Invention

### (1) Field of the Invention

The present invention relates to a word processor having a wide general concept for use including use as an electronic typewriter which includes a memory of small capacity to enable simple editing work.

### (2) Description of the Prior Art

The word processor, particularly the small word processor, and the electronic typewriter enabling simple editing work have made rapid progress recently with the diversification of office automating machinery and the growth in personal use of such machinery.

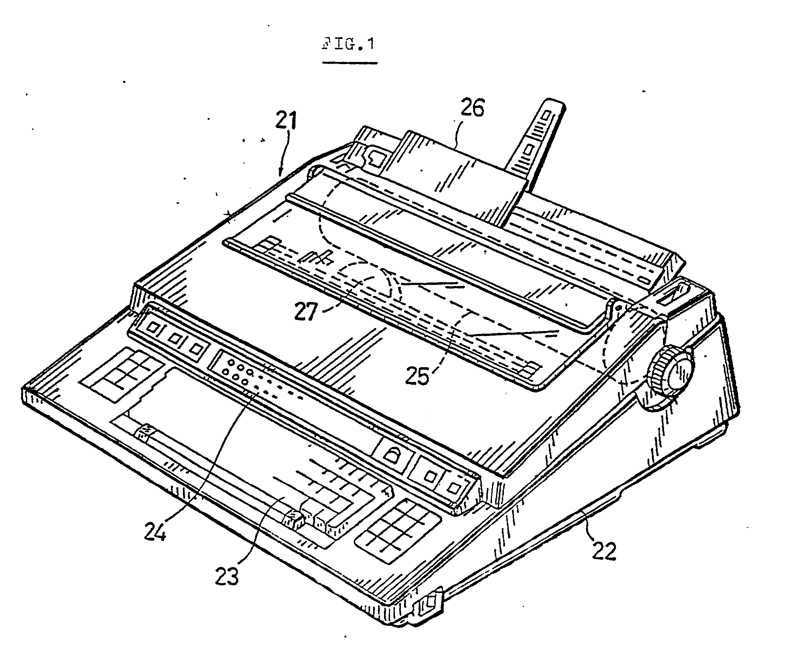

As shown in Fig. 1 of the accompanying drawings, the conventional electronic typewriter 21, for example, comprises a main body 22 including a keyboard 23, a liquid crystal display 24 and a printing section 27 arranged in this order from front to rear on the main body 22. The key board 23 includes number and letter keys and appropriate function keys. The liquid crystal display 24 extends from left to right parallel to the keyboard 23 and has a 20-figure by 2-line display range. The printing section 27 includes a platen roller 25 for supporting recording paper 26. The main body 22 contains a memory not shown.

With the above electronic typewriter, however, the momory has a small capacity and the liquid crystal display 24 can display a limited number of figures. Accordingly, this typewriter permits the user to edit brief writing only, and hence a poor editing capacity and inconvenience in use.

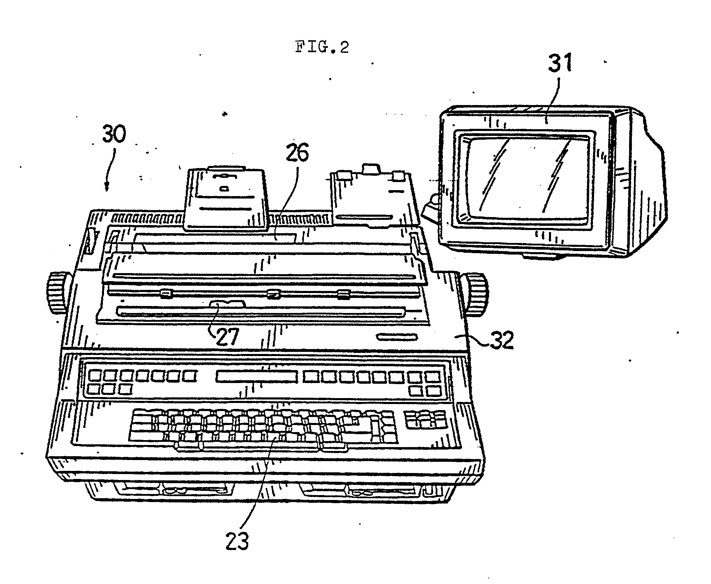

To solve this problem a word processor 30 as shown in Fig. 2 has been developed, which includes a CRT display 31 having a greater display range and placed laterally of a main body 32, and a large capacity memory. The constituent elements of this word processor 30 corresponding in function to the elements of the foregoing electronic typewriter 21 are shown with like reference numerals, and their description is not repeated.

With the above word processor 30, the CRT display 31 is disposed at a position laterally spaced from its printing section 27. When this word processor 30 is used like a typewriter wherein input data displayed and resulting prints are observed alternately, the operator is burdened with looking directions far apart for confirmation of the input data and the prints. This arrangement imposes a great strain on the operator's eyes because the operator must turn his or her eyes ove a wide range and also the display and print positions are at different distances to the operator which necessitates considerable variations in the focal length.

This word processor has the further disadvantage that the large CRT display 31 occupies a large space adjacent the printing section 27. This precludes use of a paper feed option such as an automatic paper feeding device or a track feeder. The presence of the CRT display 31 is obstructive to manual paper feeding also.

## Summary of the Invention

A primary object of the present invention, therefore, is to provide a word processor including a display of a relatively large displaying capacity and yet highly serviceable when used as a typewriter in which the operator looks alternately at a display position and a print position.

Another object of the present invention is to provide a word processor which, when used as a typewriter, imposes little strain on the operator.

A further object of the invention is to provide a word processor in which the presence of a display device is not obstructive to the use of a paper feed option such as a track feeder or to handling of paper in the case of manual paper feeding.

The above objects are fulfilled by a word processor according to the present invention which comprises a keyboard for inputting data, a flat panel type display for displaying the input data, a printing section for printing the input data, and support means for supporting the display in a position above a printing position and at a distance to an operator's eye point substantially corresponding to a distance between the operator's eye point and the printing position.

More particularly, the support means supports the display so that a space is formed between a lower end of the display and an anti-reflection plate mounted on an upper face of a main body of the word processor to enable a visual access to a paper support for feeding recording paper to the printing section.

The support means may have upper ends supporting the display and lower ends attached to a main body of the word processor to be vertically pivotable.

In this case, the lower ends of the support means are attached to the main body at positions opposite to the eye point across the printing position.

Further, the support means may have upper ends supporting the display to enable angular variations of the display in a fore and aft direction, and lower ends attached to the main body of the word processor to be vertically pivotable.

In this case, the upper ends of the support means have a support structure for supporting the display to enable angular adjustments of the display within a predetermined range, and to permit free rotation of the display outside the predetermined range.

The above predetermined range extends from a position in which a display surface of the display extends vertically to a position in which the display surface extends parallel to the paper support for feeding recording paper to the printing section.

The support means may have lower ends thereof attached to the main body of the word processor through a link mechanism, whereby an upper portion of the support means is movable along an arc of a circle about the operator's eye point having a radius corresponding to a distance from the eye point to the printing section.

The display is movable to a contained position on the main body by causing a pivotal movement of the support means.

The display may be removably attached to the support means.

The flat panel display may be disposed above and forwardly of the paper support for feeding the recording paper to the printing section to enable a visual access to the paper support through a space between a lower end of the display and the anti-reflection plate mounted on the main body of the word processor. Then the distance from the operator's eye point to the flat panel display may be substantially equalized to the distance from the eye point to the printing section.

Since a flat panel display is employed in the word processor according to the present invention as noted above, a large number of letters is displayed (on a large area), and yet the display has a small depth (i.e. thin) and occupies a small space even if the display is mounted above the printing section, which presents no obstruction to paper handling such as paper feeding. This flat panel display is constantly located at a distance substantially corresponding to the distance between the operator's eye point and the printing position. The operator, therefore, need not vary the focal length of his or her eyes when looking alternately at the display and the printing position. Furthermore, since the display is mounted above the printing section as noted above, the operator need not change his or her looking direction over a wide range. Thus, the construction according to the present invention allows the operator to check on outputs of the display and the printer with ease, thereby greatly mitigating the strain on the operators eyes.

Brief Description of the Drawings

These and other objects, advantages and features of the present invention will become apparent from the following description of preferred embodiments thereof taken in conjunction with the accompanying drawings, in which:-

Fig. 1 is a perspective view of a conventional electronic typewriter,

Fig. 2 is a perspective view of a conventional word processor having a CRT,

Fig. 3 is a perspective view of a word processor embodying the present invention,

Fig. 4 is a schematic side view showing a positional relationship between a display and an operator's eye point,

Fig. 5 is a schematic side view for illustrating an optimal set position of a flat panel display,

Fig. 6 is a perspective view of a word processor according to another embodiment of the present invention,

Fig. 7 is a schematic side view showing a positional relationship between a display and an operator's eye point in the word processor of Fig. 6,

Fig. 8 is a schematic side view for illustrating an optimal set position of a flat panel display in the word processor of Fig. 6,

Fig. 9 is a schematic side view showing a positional relationship between a display and an operator's eye point in a word processor according to a further embodiment of the invention.

Fig. 10a is a sectional side view showing an embodiment wherein the stay is adjustable and lockable at desired angle within the predetermined range,

Fig. 10b is a front view thereof,

Fig. 11a is a sectional side view showing another embodiment wherein the stay is adjustable and lockable at desired angle within the predetermined range,

Fig. 11b is a front view thereof,

Fig. 12a is a partially plan view showing an embodiment for attaching the flat panel display to the stay to be adjustable and lockable,

Fig. 12b is a sectional side view thereof, and

Fig. 13 is a partially side view showing another embodiment for attaching the flat panel display to the stay to be adjustable and lockable.

Detailed Description of the Preferred Embodiments

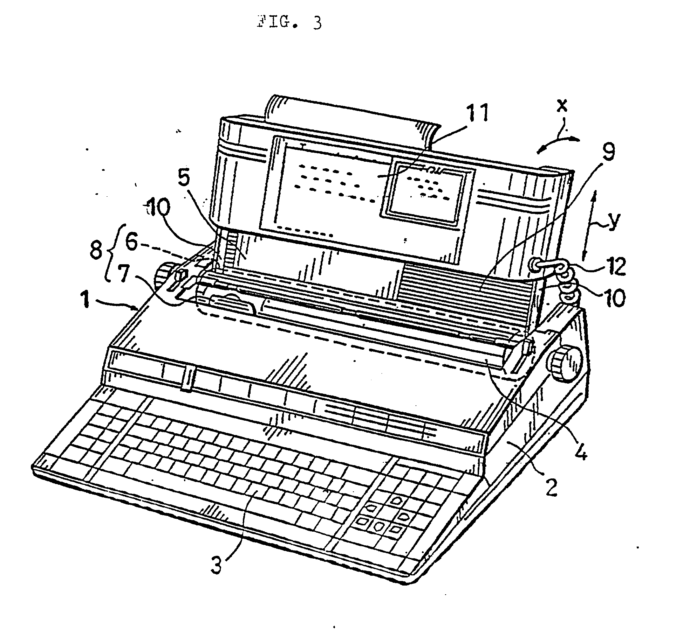

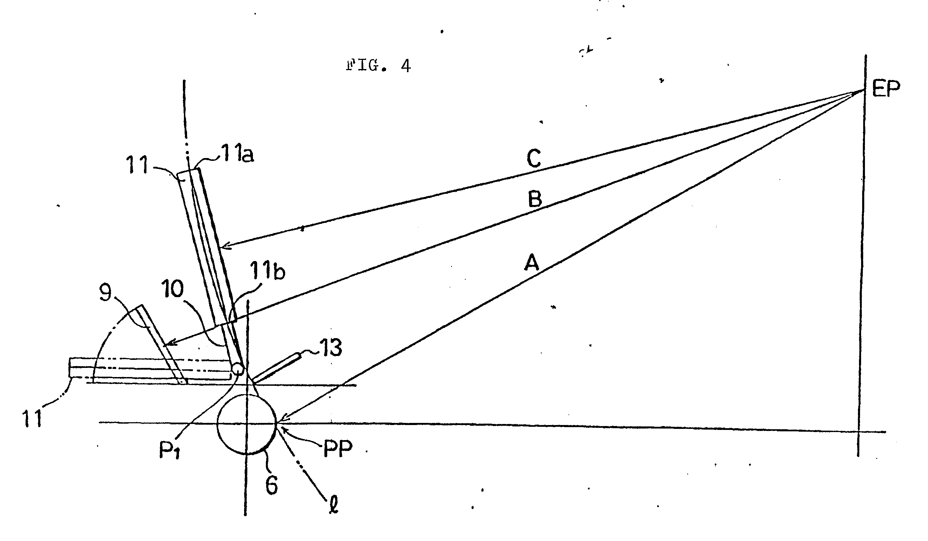

Embodiments of the present invention will be described hereinafter with reference to the drawings. Fig. 3 is a perspective view of a word processor embodying the present invention, and Fig. 4 is a schematic side view showing a relationship between a display and an operator's eye point. The word processor 1 shown therein comprises a main body 2 having a keyboard 3 arranged on an upper face thereof close to the operator and including keys for inputting alphabet, editing data and the like. The main body 2 houses, under a cover 4 rearwardly of the keyboard 3, a printing section 8 including a platen roller 6 for supporting recording paper 5, and a carrier 7 carrying a daisy wheel and a thermal head for printing data onto the recording paper 5. A paper support 9 is disposed at an angle rearwardly of the platen roller 6 for feeding the recording paper 5. A flat panel display 11 is disposed forwardly of and spaced from the paper support 9 and above the printing section 8. The display 11 is vertically slidably supported at opposite ends thereof by stays 10 extending upwardly from opposite lateral positions of the main body 2. The main body 2 contains a memory not shown. Number 12 indicates a connecting code for transmitting signals from the main body 2 to the display 11. Number 13 indicates an anti-reflection plate for presenting a good sight of a printing position. This plate 13 is vertically pivotable about a rear edge thereof.

The flat panel display 11 has a thin board construction having a large area to be capable of a liquid crystal display of 80 figures by 25 lines. The display means may comprise an electroluminescent display or a plasma display instead of the liquid crystal display. As shown in Fig. 4, the display 11 has an upper end 11a and a lower end 11b located on an arc of a circle $l$ having a radius A which is a distance between the printing position PP on the platen roller 6 and an operator's eye point EP. This is realized by selecting positions of connecting points P1 of the stays 10. The above position of the display 11 substantially equalizes a distance C between the eye point EP and the display 11 to the distance A between the eye point EP and the printing position PP. The stays 10 are attached to the main body 2 to be pivotable about the connecting points P1, so that the display 11 provides a data display position variable in accordance with the variations in the operator's eye point EP. Thus, the connecting points P1 are set to positions for allowing this adjustment to be made effectively. The lower end 11b of the display 11 is spaced upward from an upper end of the anti-reflection plate 13. The gap therby formed defines a space for the operator to perceive a lower part of the paper support 9 disposed behind the display 11. The arrow B in Fig. 4 indicates an upper limit for perceiving the recording paper 5 or a paper edge guide. The described position of the display 11 corresponds to a lower limit of the sliding movement of the display 11. The display 11 is slidable and lockable to several stages above this position. The anti-reflection plate 13 is pivotable about the rear end thereof, and naturally its lowermost position determines the lower limit for the movement of the display 11.

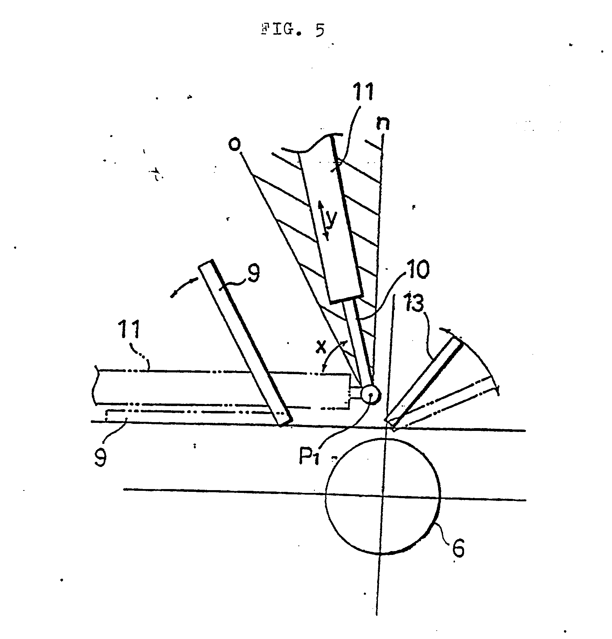

As shown in Fig. 5, the stays 10 are adjustable to any selected positions within a range between a position in which the display 11 has its display surface extending vertically as indicated by reference n and a position in which the display surface extends parallel to the paper support 9 as indicated by reference o. Outside this range the display 11 as supported by the stays 10 is freely pivotable to a prostrate position at a rear end of the main body 2.

Means for adjusting and locking the stays 10 to selected angles within the above range may be selected as appropriate from known devices including a fastening screw, a latch mechanism, and friction locking.

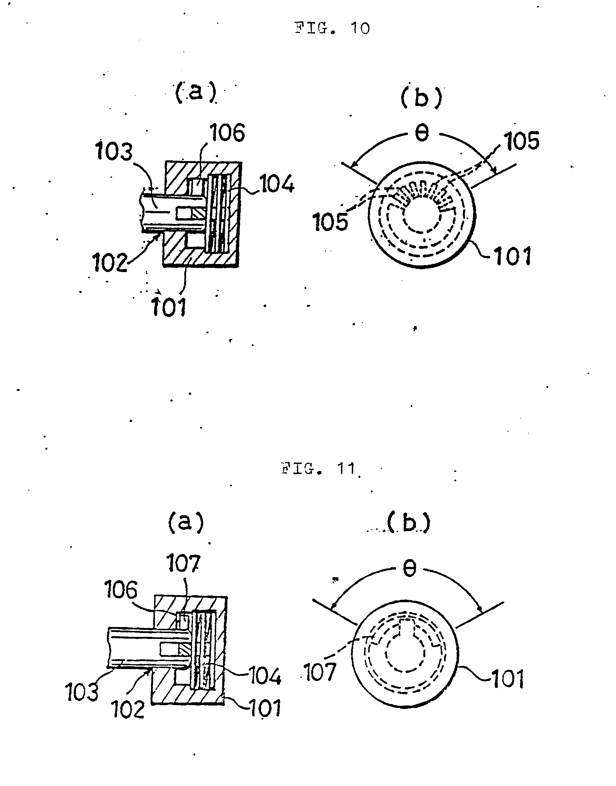

Fig. 10 shows such an embodiment. In Fig. 10, the number 101 indicates a cylindrical bearing having an insert hole 102 formed at one end thereof to insert a shaft 103. The end of the shaft 103 is contacted with a spring 104 contained in inner space of the bearing 101. Inside the bearing having the insert hole 102, as shown in Fig. 10b, several channels 105 ... are provided on a circular arc within the predetermined angle $\theta$.

On the other hand, a projecting stopper 106 is placed around the one end of the shaft 103 inserted in the bearing. One end of the stay 10, although not shown, is fixed on the surface of the bearing 101 and the shaft 103 is fixed on the main body 2 of the word processor. On the contrary, the bearing 101 may be fixed on the main body 2 of the word processor, and the end of the stay 10 on the shaft 103.

According to this embodiment, the stopper 106 is placed in the area having the channels 105 by causing the bearing 101 and the shaft 103 pivot relatively, whereby the stopper 106 falls into the channel 105 by means of resilience of the spring 104 and lock the bearing 101 and the shaft 103 unpivotably. On the other hand, by pushing the bearing 101 in directions referenced p the stopper 106 is removed from the channel 105 so that the bearing 101 and the shaft 103 are pivotable relatively. Within the angle of $\theta$, unhanding the bearing

101 after causing to pivot in proper angle while pushing, the stopper 106 falls into the channel 105 by means of resilience of the spring again and as a result the bearing is locked.

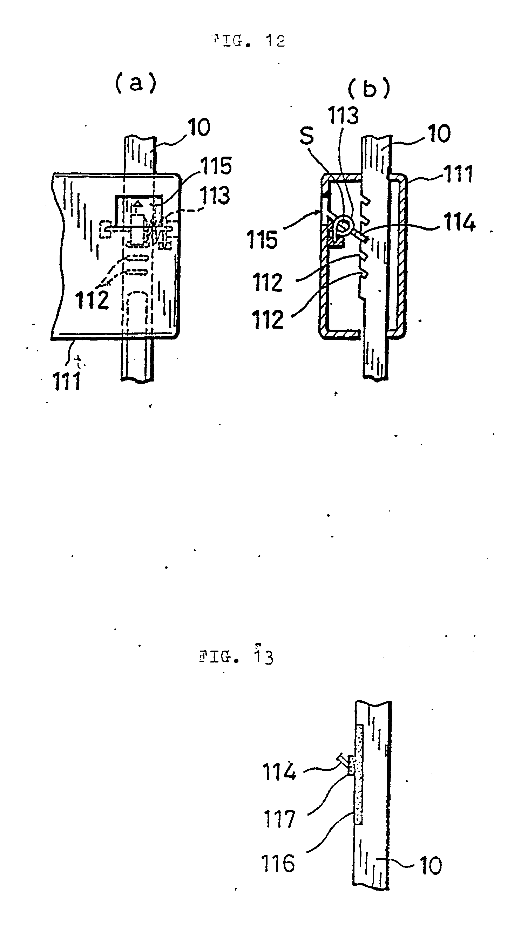

Outside the angle of θ, since channels are not provided, the bearing 101 and the shaft 103 are pivotable relatively. Fig. 11 shows another embodiment wherein the stay 10 is lockable and adjustable within the predetermined range. Although this embodiment is substantially similar in construction to the embodiment shown in Fig. 10, a friction brake member 107 is employed instead of the channels 105. Therefore, the bearing 101 and the shaft 103 are located by means of friction between the stopper 106 and the brake member 107.

Fig. 12 shows a structure for attaching the flat panel display to the stay 10. The number 111 indicates a display housing including the flat panel display. The stay 10 extends through the housing 111 and several channels 112 ... are formed in one side thereof longitudinally. The housing 111 has a stopper 114 which is pivotable about the connection point S and energized to pivot in direction wherein the stopper constantly falls into the channel 112 by means of resilience of the spring. This stopper 114 is extended beyond the connection point S and at the extended end is formed a release button 115 exposed through the aperture on the surface of the housing 111.

According to this embodiment, when the operator pushes the buttom 115, the stopper 114 removes from the channel 112 of the stay 10, whereby housing 111 is slidable along the stay 10. Conversely, when the operator unhands the release button, the stopper 114 falls into the channel 112 and the housing 111 is locked at the position.

Fig. 13 shows another embodiment for attaching the flat panel display to the stay. Although this embodiment is substantially similar in construction to the embodiment in Fig. 12, a brake member 116 is provided instead of forming the channels in stay 10. And the stopper 114 has a member having a high coefficient of friction. According to this embodiment, the flat panel is fixed on the stay 10 by means of friction between 116 and 117.

The stays 10 are removably attached at the lower ends thereof to the main body 2.

When using the word processor 1 according to this embodiment, the stays 10 are first caused to pivot on the connecting points P1 to adjust the display 11 in a direction of reference x to the position at an equal distace with the printing position PP to the operator's eye point EP. This adjustment will be facilitated by fixing the display 11 to an optimal angle for the operator in advance.

In the next step of adjustment, the display 11 is moved in a direction of reference y to move the lower end 11b of the display 11 away from the upper end of the anti-reflection plate 13 attached to an upper portion of the main body 2, the provide the space under the lower end of the display 11 so that the operator may see the recording paper 5 passing through the lower end of the paper support 9. When the display 11 is at its lowermost position, a minimum gap is formed between the lower end 11b thereof and the anti-reflection plate 12. It may be convenient, therefore to commence this adjustment step at this position.

In normal use, the operator works on the word processor 1 as adjusted above while looking at the display 11. The display 11 is readily adjustable to a position easy for the operator to see and with its surface not reflecting external light, by the pivotal movement of the stays 10 and the vertical movement of the display 11. The display 11 in this position does not obstruct a visual confirmation of the printing position and the presence and absence of recording paper 5.

In addition, when the word processor 1 is used as a typewriter involving an alternate observation the display 11 and the printing section 8, the operator's eye movement may be within a small range and the display 11 and the printing section 8 are substantially at the same distance to the operator's eye point EP which does not necessite variations in the focal length of the eyes. Thus the word processor 1 according to this embodiment significantly reduces the strain on the operator's eyes.

The display 11 is lockable in the fore and aft adjustment within a working range of the operator and is not locked outside this range. This facilitates adjustment of the display 11 to the position easy for the operator to see, and at the same time readily allows the display 11 to be turned over to the prostrate position for facility of paper handling such as when feeding or discharging the recording paper. Thus, although the display 11 having a large area is employed, the word processor 1 has excellent operability.

For the vertical adjustment, the display 11 is slidable relative to the stays 10 and lockable to a selected one of plural levels even though external light may necessitate variations in the angle of the anti-reflection plate 13. This allows the operator to confirm presence or absence of the recording paper 5 on the paper support 9 with ease.

The display surface angles of display 11 are set within the range between the vertical position and the position parallel to the paper support 9 as described. This is because, if the display surface is turned from the vertical position toward the operator, the eye point EP will become lower than the printing position PP and, conversely, if the display surface is turned backward from the position parallel to the paper support 9, the display 11 will become obstructive to paper handling.

The paper support 9 is movable to a prostrate position when the word processor is unused. This permits the display 11 to slide down to the lowermost position and to pivot completely to the prostrate paper support 9, whereby the display 11 and paper support 9 assume a contained position on the upper face of the main body 2. The contained position is shown in a broken line in Fig. 5.

When an auto sheet feeder or a tractor feeder is used as paper feed means, the stays 10 may be removed from the main body 2 for improved operability.

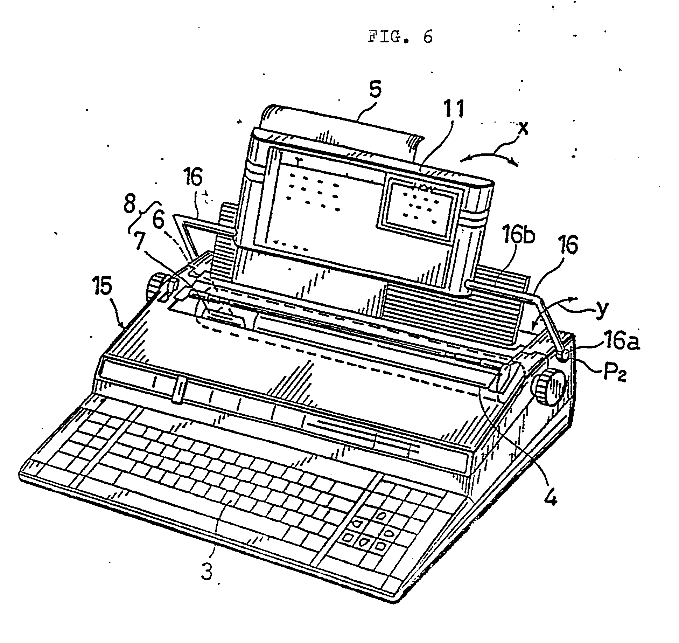

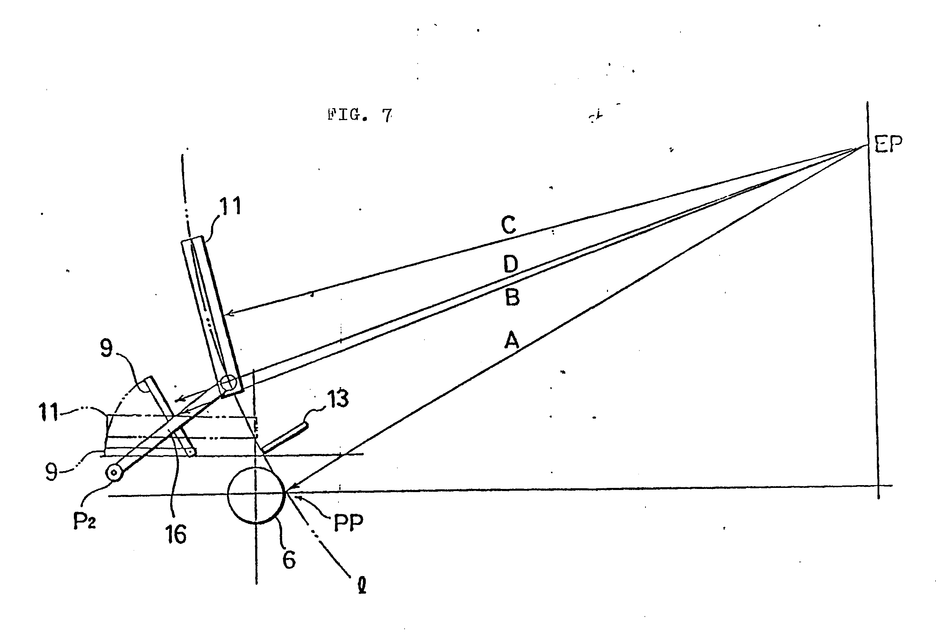

Fig. 6 is a perspective view of a word processor according to another embodiment of the present invention, and Fig. 7 is a schematic side view showing a positional relationship between the display and the operator's eye point in this word processor. This word processor 15 is similar in construction to the foregoing embodiment, and like constituent elements are affixed with like numerals without repeating their description. This embodiment has a characterizing feature especially in the construction of a stay 16 for supporting the display 11. The stay 16 is formed of a round bar bent into a U-shape. The stay 16 is attached at opposite ends 16a thereof acting as connecting points P2 to the main body 2 to be pivotable in directions referenced y. The display 11 is horizontally penetrated at a position adjacent the lower end thereof by an intermediate portion 16b of the stay 16, and is pivotable on this intermediate portion 16b in fore and aft directions referenced x.

As shown in Fig. 7, the connecting points P2 of stay 16 are set to a position opposite to the eye point EP across the platen roller 6 and adjacent an extension of a line D extending from the eye point EP to the intermediate portion 16b of stay 16. This construction is adopted to allow the display 11 to be adjustable to an optimal vertical position by means of the stay 16 since the display 11 is attached to the intermediate portion 16b of stay 16 for angular adjustment in the fore and aft direction.

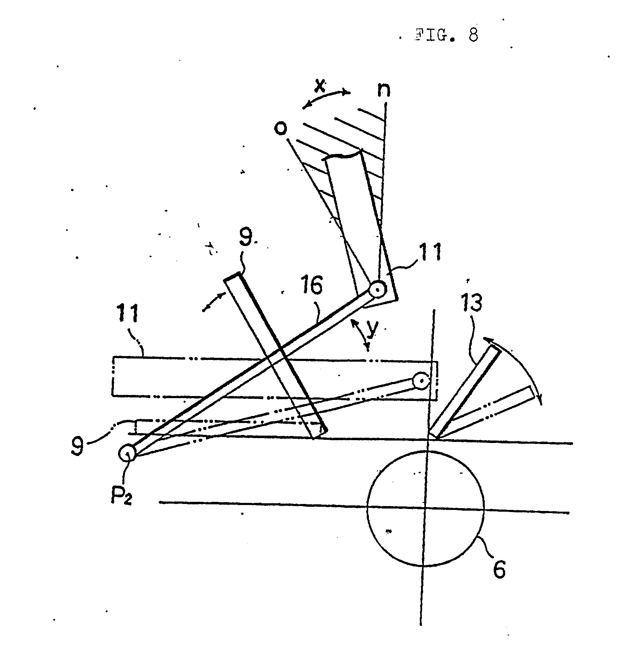

As shown in Fig. 8, the display 11 is adjustable within a range between a position in which its display surface extends vertically and a position in which the display surface extends parallel to the paper support 9 as in the foregoing embodiment. It is desirable to lower the stay 16 for adjusting and locking the display surface to the vertical position and to raise the stay 16 for adjusting and locking the display surface to the position parallel to the paper support 9. This enables an effective use of the adjustment range.

As in the foregoing embodiment, the display 11 has a lower end thereof spaced from an upper end of the anti-reflection plate 12.

According to this embodiment, the display 11 is adjustable in the fore and aft direction referenced x by pivotal movements of the display 11 on the stay 16, and in the vertical direction referenced y by pivotal movements of the stay 16. In this embodiment, as in the foregoing embodiment, the printing position of the printing section 8 and the display position of the display 11 are at an equal distance to the eye point EP and are close to each other. When there is a reflection of illuminating light or the like from the display position, an angular adjustment may be effected on the display 11 to avoid such reflection from the display surface. Thus, the strain of the operator's eyes as experienced with conventional word processors is significantly reduced by using the word processor 15 according to this embodiment.

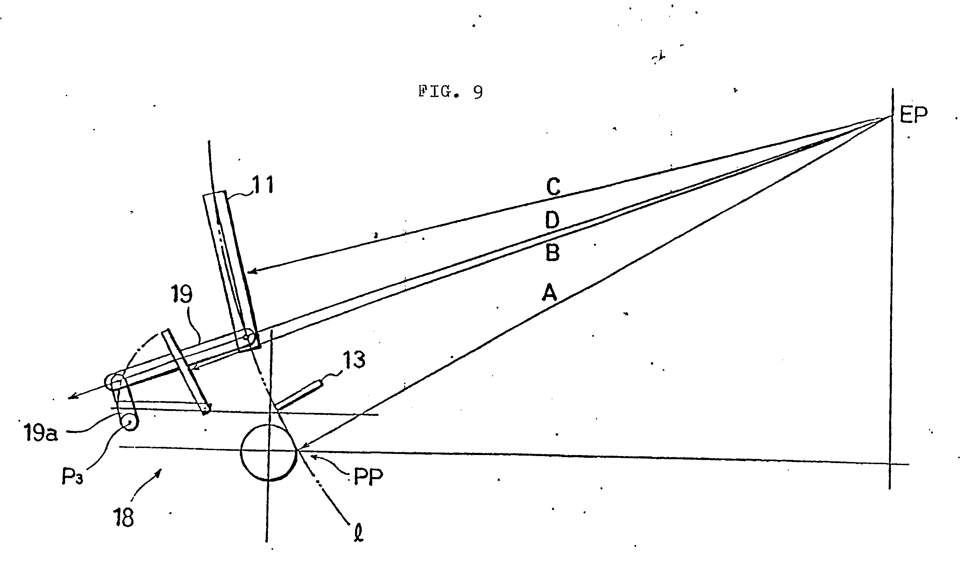

Fig. 9 is a schematic side view showing a positional relationship between the display and the operator's eye point in a word processor according to a further embodiment of the invention. This word processor 18 is similar to the word processor 15 according to the second embodiment, but employs a construction of stay 19 which permits the display 11 to move with increased precision on the arc of circle $\ell$ having the radius A corresponding to the distance between the eye point EP and the printing position PP. Specifically, this word processor 18 includes an auxiliary stay 19a disposed between the main body 2 and the connecting points P2 of the stay 16 in the preceding embodiment, the auxiliary stay 19a being attached to the main body 2 through connecting points P3.

Since this construction causes the display 11 to move closely following the arc of circle $\ell$, the distance C between the display 11 and the eye point EP is constantly maintained equal to the radius A even when the display 11 is moved to a great extent in the vertical direction.

Since the display and stay are freely pivotable, they may be weak-locked, as desired, to a standard position determined by taking into account the position of the anti-reflection plate 12 and visibili ty of the lower portion of the paper support 9. Further, since the display 11 is pivotable with the stay, the display may readily be turned to a prostrate position with the paper support 9 to be contained along the upper face of the main body 2 as shown in phantom lines in Figs. 4, 5, 7 and 8.

Although the present invention has been fully described by way of examples with reference to the accompanying drawings, it is to be noted that various changes and modifications will be apparent to those skilled in the art. Therefore, unless otherwise such changes and modifications depart from the scope of the present invention, they should be construed as being included therein.

**Claims**

1. A word processor having a memory for allowing editing work, comprising:
a keyboard for inputting data;
a flat panel type display for displaying the input data;
a printing section for printing the input data; and
support means for supporting said display in a position above a printing position and at a distance to an operator's eye point substantially corresponding to a distance between the operator's eye point and the printing position.

2. A word processor as claimed in Claim 1, wherein said support means supports said display so that a space is formed between a lower end of said display and an anti-reflection plate mounted on an upper face of a main body of said word processor to enable a visual access to a paper support for feeding recording paper to said printing section.

3. A word processor as claimed in Claim 1, wherein said support means comprises stays having upper ends supporting said display and lower ends attached to a main body of said word processor to be vertically pivotable.

4. A word processor as claimed in Claim 1, wherein said support means comprises stays having upper ends supporting said display to enable angular variations of said display in a fore and aft direction, and lower ends attached to a main body of said word processor to be vertically pivotable.

5. A word processor as claimed in Claim 3, wherein said lower ends of said support means are attached to said main body at positions opposite to said eye point across said printing position.

6. A word processor as claimed in Claim 4, wherein said upper ends of said support means have a support structure for supporting said display to enable angular adjustments of said display within a predetermined range, and to permit free rotation of said display outside said predetermined range.

7. A word processor as claimed in Claim 6, wherein said predetermined range spreads from a position in which a display surface of said display extends vertically to a position in which said display surface extends parallel to a paper support for feeding recording paper to said printing section.

8. A word processor as claimed in Claim 1, wherein said support means has lower ends thereof attached to a main body of said word processor through a link mechanism, whereby an upper portion of said support means is movable along an arc of a circle about the operator's eye point having a radius corresponding to a distance from the eye point to said printing section.

9. A word processor having a memory for allowing editing work, comprising:
a keyboard for inputting data;
a flat panel type display for displaying the input data;
a printing section for printing the input data;
a paper support for feeding recording paper to said printing section; and
support means for supporting said display in a position upwardly' spaced from an anti-reflection plate mounted on an upper face of a main body of said word processor to enable a visual access to said paper support through a space between a lower end of said display and said anti-reflection plate.

10. A word processor as claimed in Claim 9, wherein said support means comprises stays having upper ends supporting said display to enable angular variations of said display relative to said main body and within a predetermined range in a fore and aft direction.

11. A word processor as claimed in Claim 10, wherein said predetermined range extends from a position in which a display surface of said display extends vertically to a position in which said display surface extends parallel to said paper support.

12. A word processor as claimed in Claim 10, wherein said support means is freely pivotable outside said predetermined range.

13. A word processor as claimed in Claim 12, wherein said display is movable to a contained position on said main body by causing a pivotal movement of said support means.

14. A word processor as claimed in Claim 9, wherein said display is removably attached to said support means.

15. A word processor as claimed in Claim 9, wherein said support means comprises stays having upper ends supporting said display and lower ends attached to said main body to be vertically pivotable.

16. A word processor as claimed in Claim 9, wherein said support means comprises stays having upper ends supporting said display to enable angular variations of said display in a fore and aft direction, and lower ends attached to said to be vertically pivotable.

17. A word processor as claimed in Claim 15, wherein said lower ends of said support means are attached to said main body at positions opposite to said eye point across said printing position.

18. A word processor as claimed in Claim 16, wherein said upper ends of said support means have a support structure for supporting said display to enable angular adjustments of said display within a predetermined range, and to permit free rotation of said display outside said predetermined range.

8

FIG.1

FIG.2

FIG. 3

FIG. 4

FIG. 5

FIG. 6

FIG. 7

EP

C
D
B
A

11

9

11

13

9

P₂

16

6

PP

ℓ

0 257 589

FIG. 8

FIG. 9

EP

C
D
B
A

11

19

19a

P₃

18

13

PP

ℓ

0 257 589

FIG. 10

(a)

(b)

103 106 104 102 101

θ 105 105 101

FIG. 11

(a)

(b)

107 106 104 103 102 101

θ 107 101

FIG. 12

(a)

10
115
113
112
111

(b)

S
113
10
111
114
115
112
112

FIG. 13

114
117
116
10